# EUROPÄISCHE PATENTSCHRIFT

(11) **EP 0 413 323 B1**
(45) Veröffentlichungstag und Bekanntmachung des Hinweises auf die Patenterteilung: **28.07.1993**
(21) Anmeldenummer: 90115638.0
(22) Anmeldetag: 16.08.1990
(51) Int. Cl.: B60D 1/06

(54) **Kugelkopfkupplung für Anhänger**
Ball-hitch for trailers
Accouplement à rotule pour remorques

(30) Priorität: 18.08.1989 DE 3927223
(43) Veröffentlichungstag der Anmeldung: 20.02.1991
(73) Patentinhaber: Firma Albert Berndes, D-32312 Lübbecke (DE)
(72) Erfinder: Berndes, Karl-Josef, D-4990 Lübbecke 1 (DE)
(74) Vertreter: Stracke, Alexander, Dipl.-Ing.

(56) Entgegenhaltungen:
- DE-A- 1 964 974
- DE-A- 3 800 184

## Beschreibung

Die vorliegende Erfindung betrifft eine Kugelkopfkupplung für Anhänger gemäß dem Oberbegriff des Anspruchs 1.

Eine gattungsbildende Kugelkopfkupplung ist aus der DE-A 38 00 184 bekannt.

In ihrer Funktionsfähigkeit hat sich die darin gezeigte und beschriebene Kugelkopfkupplung bewährt, wobei sie insbesondere dort Verwendung findet, wo zwischen dem Kupplungsgehäuse und dem darüber liegenden Fahrzeugteil, beispielsweise einer tiefliegenden Hecktüre, nur geringfügig Platz vorhanden ist.

Allerdings hat sich herausgestellt, daß diese Kugelkopfkupplung relativ aufwendig gestaltet ist und deshalb eine recht teure Herstellung zur Folge hat.
Da es sich bei derartigen Kugelkopfkupplungen um Massenartikel handelt, die in großen Stückzahlen hergestellt werden, stehen hohe Herstellungs- bzw. Fertigungskosten einer optimalen Verwertung im Wege.

Der vorliegenden Erfindung liegt daher die Aufgabe zugrunde, eine Kugelkopfkupplung der gattungsgemäßen Art so zu gestalten, daß sie konstruktiv einfachst aufgebaut und kostengünstig herstellbar ist.

Diese Aufgabe wird erfindungsgemäß durch die im kennzeichnenden Teil des Anspruchs 1 genannten Merkmale gelöst.

Während bei der bekannten Kugelkopfkupplung die Kugelpfanne aus ihrer arretierten Lage nur gelöst werden konnte, wenn mit Hilfe des Handgriffs ein mit dem Arretierbolzen verbundener Bügel betätigt wurde, der Arretierungsbolzen also nur mittelbar durch den Handgriff bewegt werden konnte, erlaubt die Erfindung dessen unmittelbare Betätigung durch den Handgriff.

Da somit wesentlich weniger Teile erforderlich sind, werden zwangsläufig die Herstellungskosten gesenkt.

Eine vorteilhafte Ausgestaltung der Erfindung sieht vor, daß auf dem Arretierungsbolzen eine Rolle gelagert ist, an der sich die Zunge des Handgriffs beim Andrücken abstützt, so daß sich lediglich eine Rollreibung zwischen der zugeordneten Fläche der Zunge und der Rolle beim Verschieben des Arretierungsbolzens ergibt. Dadurch ist eine wesentlich leichtere Handhabung des Handgriffs bzw. ein leichteres Lösen der Arretierung gegeben.

Die Andruckfläche der Zunge kann in Form einer Kurvenbahn ausgebildet sein, um so ein noch leichteres Verschieben des Arretierungsbolzens entgegen der Federkraftrichtung zu ermöglichen.

Weiter ist es zweckmäßig beidseitig des Kupplungsgehäuses einen Handgriff auf dem Bolzen anzuordnen, die dann durch einen Bügel miteinander verbunden sind.

Ein in dieser Form gebildeter Bügelgriff ermöglicht dann einen zweiseitigen, symmetrischen Angriff auf den Arretierungsbolzen und trägt gleichfalls dazu bei, die Handhabung beim Lösen aus der Arretierstellung zu vereinfachen.

Weitere vorteilhafte Ausgestaltungen der Erfindung sind in den Unteransprüchen gekennzeichnet.

Ausführungsbeispiele der Erfindung werden nachfolgend anhand beigefügter Zeichnungen beschrieben.

Es zeigen:

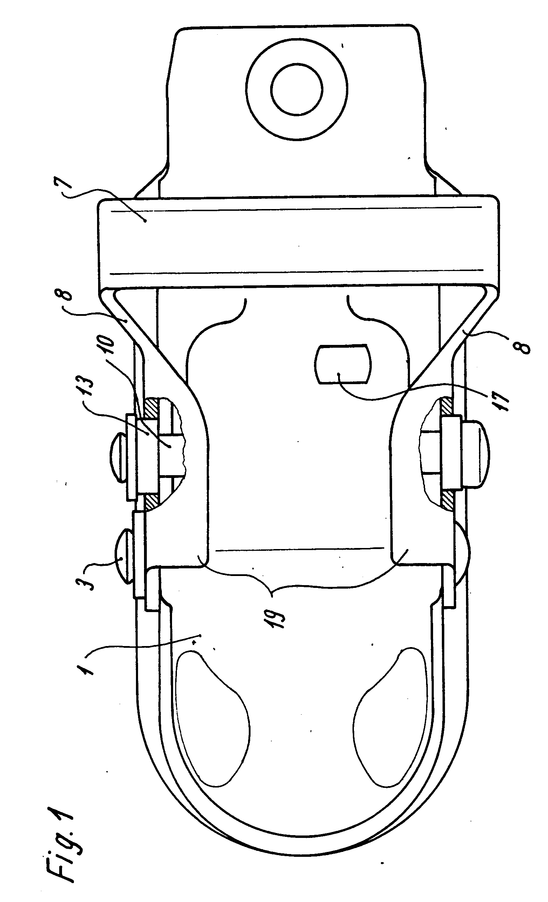

Figur 1 eine Kugelkopfkupplung nach der Erfindung in einer Draufsicht,
Figur 2 die Kugelkopfkupplung in einer Unteransicht,

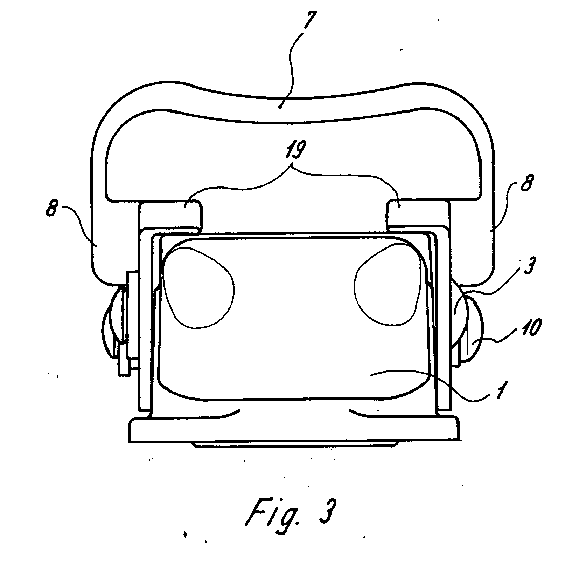

Figur 3 die Kugelkopfkupplung in einer Vorderansicht,

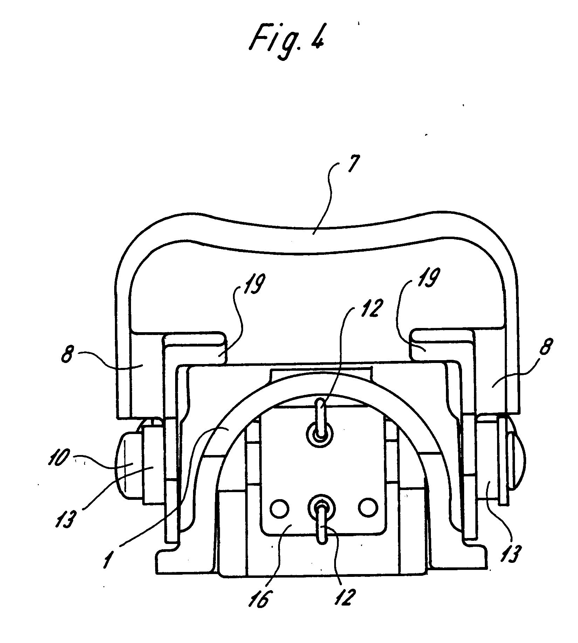

Figur 4 die Kugelkopfkupplung in einer Rückansicht,
Figur 5 die Kugelkopfkupplung in arretierter Gebrauchsstellung in einer Seitenansicht,
Figur 6 die Kugelkopfkupplung in gelöster Stellung gleichfalls in einer Seitenansicht,
Figur 7 einen Längsschnitt durch die Kugelkopfkupplung in einer Stellung, die der in der Figur 6 entspricht,
Figur 8 einen Längsschnitt durch die Kugelkopfkupplung in einer Gebrauchsstellung, die der in der Figur 5 gezeigten entspricht,
Figur 9 einen Längsschnitt durch ein weiteres Ausführungsbeispiel der Erfindung,
Figur 10 eine Draufsicht auf die Kugelkopfkupplung nach der Figur 9.

Die in den Figuren dargestellte Kugelkopfkupplung für Anhänger besteht in ihrem Grundaufbau aus einem im Querschnitt etwa U-förmigen Kupplungsgehäuse 1, einer darin angeordneten Kugelpfanne 2, einem die Kugelpfanne 2 in Schließstellung arretierenden Arretierungsbolzen 10 sowie zwei Handgriffen 8, mit denen die Arretierung lösbar ist.

Die Kugelpfanne 2 ist auf einem Bolzen 3 schwenkbar angeordnet, der in den Seitenflanken des Kupplungsgehäuses 1 gelagert ist.
Auch die Handgriffe 8 sind auf dem Bolzen 3 schwenkbar angeordnet, und zwar auf den aus den Seitenflanken ragenden Enden des Bolzens 3. Dabei weisen die Enden des Bolzens 3 einen Nietkopf auf, so daß die Handgriffe 8 gegen ein seitliches Verrutschen gesichert sind.

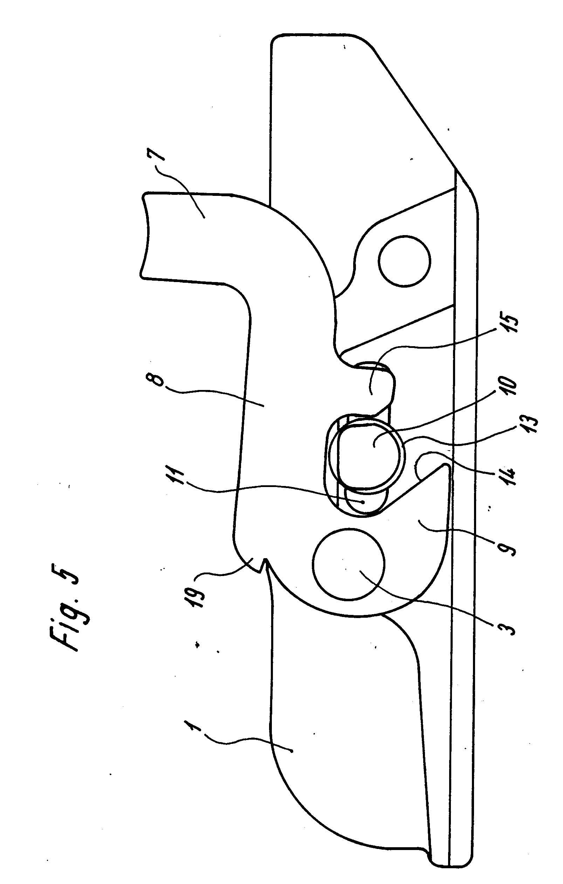

Die auf der Außenseite des Kupplungsgehäuses 1 verlaufenden Handgriffe 8 sind durch einen Bügel 7 miteinander verbunden, der in einer Schließstellung der Kugelkopfkupplung, wie sie beispielsweise in den Figuren 5,8 und 9 dargestellt ist, mit einem solchen Abstand zur Oberseite des Kupplungsgehäuses 1 verläuft, daß ein einwandfreies Einstecken von Fingern und ein Untergreifen möglich ist.

Jeder Handgriff 8 ist mit einer zur Unterseite des Kupplungsgehäuses 1 gerichteten in gleicher Ebene abgewinkelten Zunge 9 versehen, so daß der Handgriff 8 beim Anheben im Sinne eines Kniehebels wirkt.

Der parallel zum Bolzen 3 verlaufende Arretierungsbolzen 10 ist in Langlöchern 11 verschiebbar gelagert, die in den Seitenflanken des Kupplungsgehäuses 1 angeordnet sind und in Längsachsrichtung des Kupplungsgehäuses 1 verlaufen.

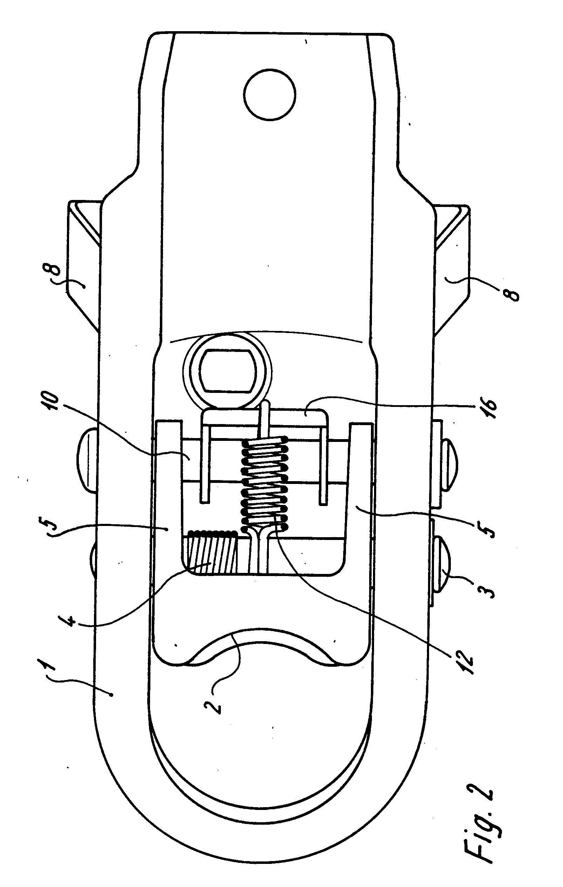

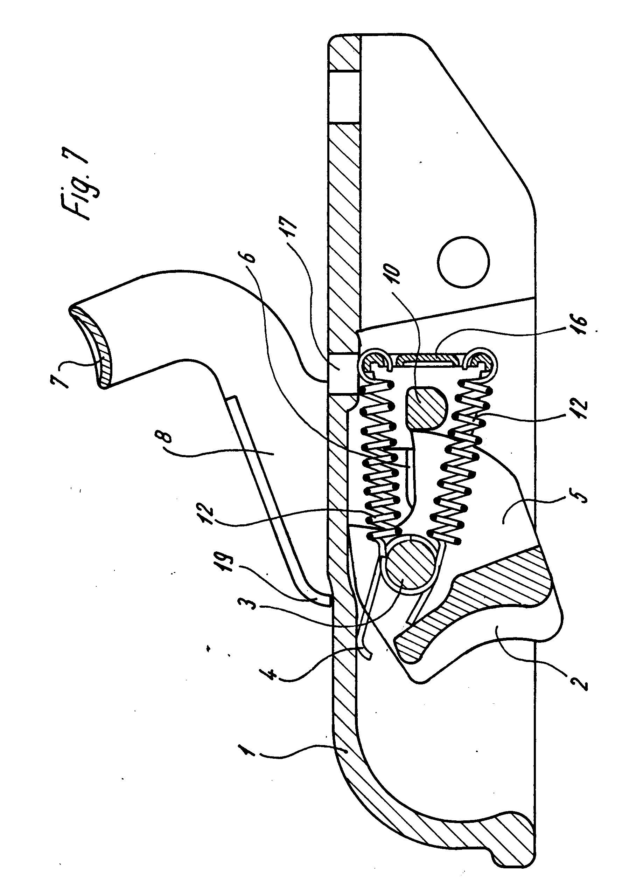

Während eine Schenkelfeder 4, die auf dem Bolzen 3 geführt ist, sich bei dem in den Figuren 2,7 und 8 dargestellten Ausführungsbeispiel einerseits an der oberen Innenseite des Kupplungsgehäuses 1 und andererseits an der Rückseite der Kugelpfanne 2 abstützt und so einen Druck auf die Kugelpfanne 2 ausübt, ist der Arretierungsbolzen durch zwei Zugfedern 12 in Richtung der Kugelpfanne 2 federbelastet, wobei die Zugfedern mit einem Ende am Bolzen 3 angehängt sind und mit ihrem jeweiligen anderen Ende in einen Federhalter 16 eingreifen, der mit dem Arretierungsbolzen 10 verbunden ist.
Dabei ist der Federhalter 16 im Querschnitt etwa U-förmig ausgebildet, wobei seine beiden parallelen Schenkel auf dem Arretierungsbolzen 10 gelagert sind und der die beiden Schenkel verbindende Flansch, in den die Zugfedern 12 eingreifen, auf der dem Bolzen 3 gegenüberliegenden Seite des Arretierungsbolzens 10 verläuft.

Statt der im Ausführungsbeispiel gezeigten Zugfedern ist selbstverständlich auch der Einsatz anderer Federn möglich. Beispielsweise kann in an sich bekannter Weise auf dem Arretierungsbolzen 10 auch eine Schenkelfeder geführt sein, die sich dann einerseits am Bolzen 3 und andererseits an der inneren Oberseite des Kupplungsgehäuses 1 abstützt. Denkbar ist auch, daß mehr als zwei Zugfedern eingesetzt werden, wobei die Anzahl und Dimensionierung der Federn von den zu erwartenden Betriebsbedingungen abhängt.

Auf seinen aus den Seitenflanken des Kupplungsgehäuses 1 ragenden Enden des Arretierungsbolzens 10, die mit einem Nietkopf versehen sind, ist jeweils eine Rolle 13 drehbar angeordnet, an der sich beim Anheben des Handgriffs 8 eine Andruckfläche 14 der Zunge 9 abstützt.

Weiter ist der Handgriff 8 mit einer Sicherungsnase 15 versehen, die in die gleiche Richtung weist wie die Zunge 9. Diese Sicherungsnase 15 ist so angeordnet, daß sich in Schließstellung der Arretierungsbolzen 10 bzw. die Rolle 13 zwischen der Zunge 9 einerseits und der Sicherungsnase 15 andererseits befindet.
Sollte in Gebrauchsstellung ein Federbruch der Zugfedern 12 eintreten, so wäre trotzdem eine weiterhin arretierte Lage der Kugelpfanne 2 gewährleistet, da durch die Sicherungsnase 15 ein Verschieben des Arretierungsbolzens 16, durch das erst ein Lösen aus der Arretierung möglich ist, wirksam verhindert wird.

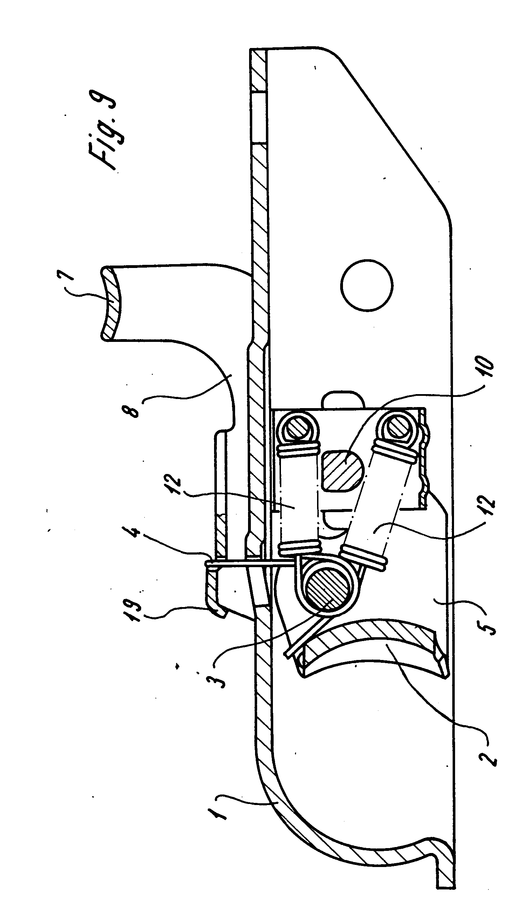

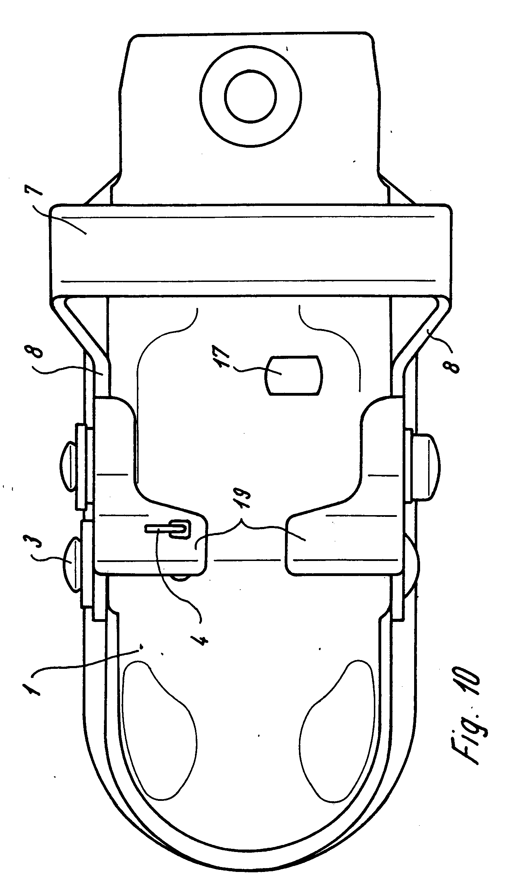

Bei dem in den Figuren 9 und 10 gezeigten Ausführungsbeispiel ist ein Ende der Schenkelfeder 4 durch die Oberseite des Kupplungsgehäuses 1 geführt und außerhalb der durch den Bolzen 3 gebildeten Drehachse, auf der dem Bügel 7 zugewandten Seite in einem der Handgriffe 8 eingehängt. Dadurch ist gewährleistet, daß die Handgriffe 8 immer nach unten, also in Richtung des Kupplungsgehäuses gezogen werden, so daß auch bei einem Bruch der Zugfedern 12 eine Sicherung des Arretierungsbolzens vorliegt, da beispielsweise bei durch den Fahrbetrieb auftretenden Erschütterungen der Handgriff in der fixierten Sicherungslage verbleibt.

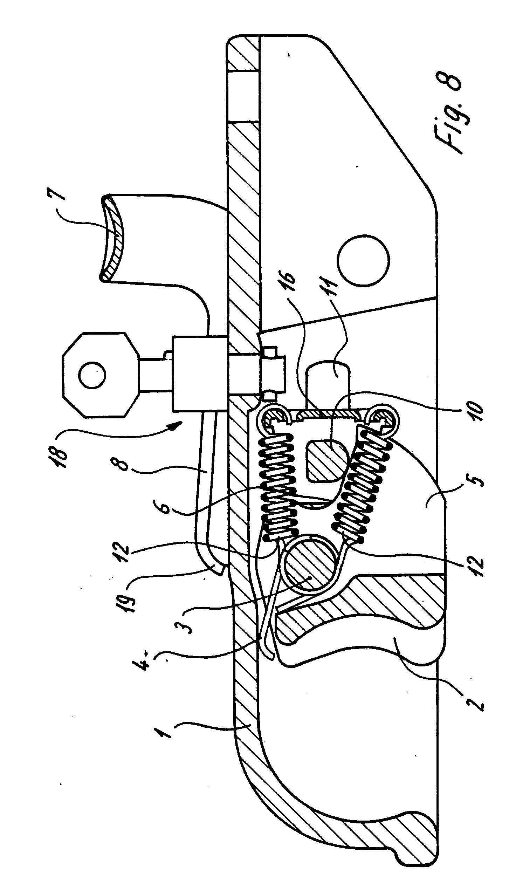

Auf der Oberseite des Kupplungsgehäuses ist eine Öffnung 17 vorgesehen, in die ein Steckschloß 18, wie in der Figur 8 dargestellt, in Schließstellung der Kugelpfanne einsteckbar ist.
Der in das Innere des Kupplungsgehäuses 1 ragende Zapfen des Steckschlosses 18 ist dabei in so engem Abstand zum Federhalter 16 plaziert, daß ein Verschieben des Arretierungsbolzens 10 bzw. des Federhalters 16 in den Langlöchern 11 nahezu ausgeschlossen ist. Durch diese Maßnahme wird ein Entriegeln der Kugelkopfkupplung verhindert, so daß sich das Einsteckschloß 18 als wirksame Diebstahlsicherung erweist.

Jeder Handgriff 8 ist mit einem Anschlagwinkel 19 versehen, der in den Bereich der Oberseite des Kupplungsgehäuses 1 hineinragt.
Beim Hochziehen der Handgriffe 8 stoßen diese Anschlagwinkel 19 gegen die Oberseite des Kupplungsgehäuses 1 und zwar in einer Stellung der Handgriffe 8, in der die Andruckfläche 14 bzw. die Zunge 9 noch ausreichend Kontakt mit der Rolle 13 hat.
Dadurch wird verhindert, daß der Handgriff zu weit verschwenkt wird, wobei dann die Gefahr bestünde, daß beispielsweise die Spitze der Zunge 9 die auf den Arretierungsbolzen 10 wirkende Federkraft voll aufnehmen müßte, was naturgemäß einen erhöhten Verschleiß an der Zunge 9 zur Folge hätte. Weiter bestünde die Gefahr, daß der Handgriff 8 zu weit geschwenkt würde, mit der Folge, daß die Andruckfläche 14 aus dem Wirkbereich käme.

Neben der hier gezeigten Möglichkeit den Anschlagwinkel 19, der an dem Handgriff 8 angeformt ist, sind auch andere Anschlagsformen denkbar, beispielsweise Zapfen oder Nocken, die den Schwenkbereich des Handgriffs nach oben hin begrenzen.

Im folgenden wird die Funktionsweise der erfindungsgemäßen Kugelkopfkupplung beschrieben:

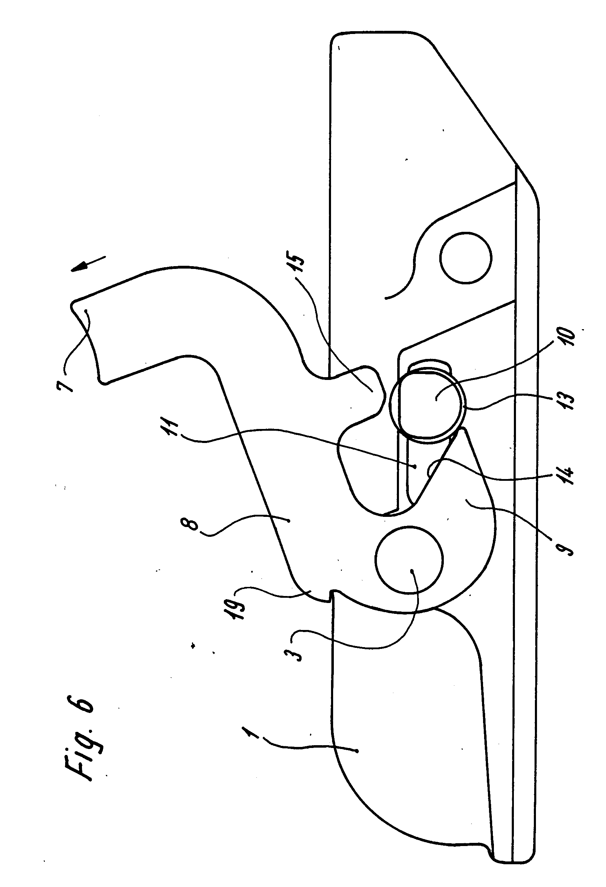

Um eine Schließstellung der Kugelpfanne 2, bei der der Arretierungsbolzen 10 auf den Kurven 6 der Auflaufnasen 5 der Kugelpfanne 2 ruht, zu lösen, werden die Handgriffe 8 durch Ziehen des Bügels 7 in Richtung des in der Figur 6 gezeigten Pfeiles angezogen.
Dabei wird die Zunge 9 mit ihrer Andruckfläche 14 gegen die Rolle 13 gedrückt und der Arretierungsbolzen 10 entgegen der Richtung der Federkraft der Zugfedern 12 im Langloch soweit verschoben, bis er den Bereich der Kurve 6 verlassen hat.
Die arretierende Wirkung des Arretierungsbolzens 10 ist dann aufgehoben. Gleichzeitig wird die Kugelpfanne 2 durch die Schenkelfeder 4 in Richtung der Unterseite des Kupplungsgehäuses 1 verschwenkt, so daß keine formschlüssige Wirkung der Kugelpfanne 2 mehr besteht.

Demgegenüber wird die Kugelpfanne 2 dadurch in eine arretierende Schließstellung gebracht, daß das Kupplungsgehäuse im Bereich der Kugelpfanne 2 soweit über eine nicht dargestellte Kugel gestülpt wird, bis diese an der Kugelpfanne 2 anliegt. Durch weiteres Herunterdrücken des Kupplungsgehäuses 1 gegen die Federwirkung der Schenkelfeder 4 wird die Kugelpfanne 2 in Richtung zur Oberseite des Kupplungsgehäuses 1 verschwenkt, wobei ein gewisser Widerstand, der durch die Kurvenform der entsprechenden Seite der Auflaufnase 5 im Zusammenwirken mit dem Arretierungsbolzen 10 verursacht wird, zu überwinden ist.

Nach Überwindung dieses Widerstandes wird der Arretierungsbolzen 10 durch die Zugfedern 12 über die Kurve 6 geführt, so daß er die Kugelpfanne 2 in Schließstellung hält. Da sich dabei der Arretierungsbolzen 10 in Richtung der Kugelpfanne bewegt und dabei gegen die Andruckfläche 14 stößt, wird auch die Zunge 9 bzw. der Handgriff 8 zurückgeschwenkt, so daß der Handgriff in Schließstellung, wie sie in den Figuren 5 und 8 dargestellt ist, gebracht wird.

## Patentansprüche

1. Kugelkopfkupplung für Anhänger, mit einem im Querschnitt etwa U-förmigen Kupplungsgehäuse (1), einer darin angeordneten, um einen in den Seitenflanken des Kupplungsgehäuses (1) gelagerten Bolzen (3) schwenkbaren und in Schließstellung arretierten Kugelpfanne (2), die durch eine sich rückseitig abstützende, auf den Bolzen (3) geführte Schenkelfeder (4) belastet ist, einen sich an der Rückseite der Kugelpfanne (2) abstützenden, in axialen Langlöchern (11) des Kupplungsgehäuses (1) verschiebbar geführten, federbelasteten Arretierungsbolzen (10) und einem die Arretierung der Kugelpfanne (2) beeinflussenden Handgriff (8), der seitlich des Kupplungsgehäuses (1) schwenkbar auf den Bolzen (3) angeordnet ist, wobei der Handgriff (8) eine in gleicher Ebene abgewinkelte Zunge (9) aufweist, **dadurch gekennzeichnet,** daß die Zunge (9) zum Lösen der Arretierung entgegen der Federkraftrichtung an den Arretierungsbolzen (10) andrückbar ist.

2. Kugelkopfkupplung nach Anspruch 1, bei der beidseitig des Kupplungsgehäuses ein Handgriff vorgesehen ist, dadurch gekennzeichnet, daß beide Handgriffe (8) durch einen Bügel (7) miteinander verbunden sind.

3. Kugelkopfkupplung nach Anspruch 2, dadurch gekennzeichnet, daß in Schließstellung der Kugelkopfkupplung der Bügel (7) mit Abstand zum Kupplungsgehäuse (1) verläuft.

4. Kugelkopfkupplung nach Anspruch 1, dadurch gekennzeichnet, daß der Arretierungsbolzen (10) mit einer Rolle (13) versehen ist, an die die Zunge (9) des Handgriffs (8) andrückbar ist.

5. Kugelkopfkupplung nach Anspruch 1, dadurch gekennzeichnet, daß die dem Arretierungsbolzen (10) zugewandte Andruckfläche (14) kurvenförmig ausgebildet ist.

6. Kugelkopfkupplung nach Anspruch 1, dadurch gekennzeichnet, daß der Handgriff (8) eine Sicherungsnase (15) aufweist, wobei in Schließstellung der Kugelkopfkupplung der Arretierungsbolzen (10) bzw. die Rolle (13) in dem zwischen der Zunge (9) und der Sicherungsnase (15) gebildeten Zwischenraum einliegt.

7. Kugelkopfkupplung nach Anspruch 1, dadurch gekennzeichnet, daß der Arretierungsbolzen (10) durch mindestens eine Zugfeder (12) belastet ist, die einerseits am Bolzen (3) und andererseits an den Arretierungsbolzen (10) angreift.

8. Kugelkopfkupplung nach Anspruch 7, dadurch gekennzeichnet, daß zwei Zugfedern (12) vorgesehen sind, die im Bereich des Arretierungsbolzens (10) an einem Federhalter (16) eingehängt sind, der mit dem Arretierungsbolzen (10) verbunden ist.

9. Kugelkopfkupplung nach Anspruch 8, dadurch gekennzeichnet, daß der Federhalter (16) im Querschnitt etwa U-förmig ausgebildet ist, wobei die beiden parallelen Schenkel am Arretierungsbolzen (10) festgelegt sind, während die Zugfedern (12) in dem die beiden parallelen Schenkel miteinander verbindenden Flansch eingehängt sind.

10. Kugelkopfkupplung nach einem der vorgehenden Ansprüche 1 bis 9, dadurch gekennzeichnet, daß an der Oberseite des Kupplungsgehäuses (1) eine Öffnung (17) vorgesehen ist, durch die ein Steckschloß (18) einsteckbar ist, wobei ein in den Innenraum des Kupplungsgehäuses (1) ragender Zapfen des Steckschlosses (18) auf der dem Arretierungsbolzen (10) abgewandten Seite des Federhalters (16) unmittelbar hinter dem die Schenkel des Federhalters (16) verbindenden Flansch angeordnet ist.

11. Kugelkopfkupplung nach Anspruch 1, dadurch gekennzeichnet, daß Anschlagmittel vorgesehen sind, mit denen der Schwenkbereich des Handgriffs (8) begrenzbar ist.

12. Kugelkopfkupplung nach Anspruch 11, dadurch gekennzeichnet, daß als Anschlagmittel ein Anschlagwinkel (19) am Handgriff (8) vorgesehen ist, der in den Bereich der Oberseite des Kupplungsgehäuses (1) hineinragt.

13. Kugelkopfkupplung nach Anspruch 1, dadurch gekennzeichnet, daß ein Schenkel der Schenkelfeder (4) durch die Oberseite des Kupplungsgehäuses (1) geführt und außerhalb der durch den Bolzen (3) gebildeten Drehachse zwischen dem Bolzen (3) und dem Griffende des Handgriffs (8) an diesem festgelegt ist.

## Claims

1. A ball head coupling for trailers, comprising a coupling housing (1) which is approximately U-shaped in cross-section, a ball socket (2) which is arranged in the coupling housing (1) and which is pivotable about a pin (3) mounted in the side flanks of the coupling housing (1) and which is arrested in the closure position and which is loaded by a leg spring (4) which is carried on the pin (3) and which bears against the ball socket at the rear, a spring-loaded arresting pin (10) which bears against the rear side of the ball socket (2) and which is guided slidably in axial slots (11) in the coupling housing (1), and a handle (8) which influences the arresting of the ball socket (2) and which is arranged laterally of the coupling housing (1) pivotably on the pin (3), the handle (8) having a tongue (9) which is angled in the same plane, characterised in that the tongue (9) can be pressed against the arresting pin (10) in opposite relationship to the direction of the spring force for releasing the arresting action.

2. A ball head coupling according to claim 1 wherein a handle is provided on both sides of the coupling housing characterised in that the two handles (8) are connected together by a loop portion (7).

3. A ball head coupling according to claim 2 characterised in that in the closure position of the ball head coupling the loop portion (7) extends at a spacing relative to the coupling housing (1).

4. A ball head coupling according to claim 1 characterised in that the arresting pin (10) is provided with a roller (13) against which the tongue (9) of the handle (8) can be pressed.

5. A ball head coupling according to claim 1 characterised in that the contact surface (14) which is towards the arresting pin (10) is of a curved configuration.

6. A ball head coupling according to claim 1 characterised in that the handle (8) has a securing nose (15), wherein in the closure position of the ball head coupling the arresting pin (10) or the roller (13) is in the intermediate space form between the tongue (9) and the securing nose (15).

7. A ball head coupling according to claim 1 characterised in that the arresting pin (10) is loaded by at least one tension spring (12) which engages on the one hand the pin (3) and on the other hand the arresting pin (10).

8. A ball head coupling according to claim 7 characterised in that there are provided two tension springs (12) which are attached in the region of the arresting pin (10) to a spring holder (16) which is connected to the arresting pin (10).

9. A ball head coupling according to claim 8 characterised in that the spring holder (16) is of approximately U-shaped configuration in cross-section, wherein the two parallel legs are fixed to the arresting pin (10) while the tension springs (12) are attached to the flange connecting the two parallel legs together.

10. A ball head coupling according to one of preceding claims 1 to 9 characterised in that provided at the top side of the coupling housing (1) is an opening (17) through which a plug-in lock (18) can be inserted, wherein a pin of the plug-in lock (18), which projects into the interior of the coupling housing (1), is arranged on the side of the spring holder (16), which is remote from the arresting pin (10), immediately behind the flange which connects the legs of the spring holder (16) .

11. A ball head coupling according to claim 1 characterised in that there are provided abutment means for limiting the range of pivotal movement of the handle (8).

12. A ball head coupling according to claim 11 characterised in that the abutment means are an angular abutment portion (19) on the handle (8), which projects into the region of the top side of the coupling housing (1).

13. A ball head coupling according to claim 1 characterised in that a leg of the leg spring (4) is passed through the top side of the coupling housing (1) and fixed to the handle (8) outside the axis of rotation formed by the pin (3) between the pin (3) and the gripping end of the handle (8).

## Revendications

1. Accouplement à rotule pour remorque, comportant un boîtier d'accouplement (1) de section approximativement en forme de U, un coussinet sphérique (2) placé à l'intérieur de celui-ci, pouvant pivoter autour d'un goujon (3) monté dans les flancs latéraux du boîtier d'accouplement (1) et bloqué en position de fermeture, ce coussinet étant placé sous l'action d'un ressort spiral (4) guidé sur le goujon (3) et s'appuyant sur la face arrière, un goujon de blocage (10) soumis à l'action d'un ressort, guidé mobile dans des trous oblongs (11) axiaux du boîtier d'accouplement (1), s'appuyant sur la face arrière du coussinet sphérique (2), et une anse (8) permettant le blocage du coussinet sphérique (2), montée mobile sur le goujon (3) sur le côté du boîtier d'accouplement (1), l'anse (8) présentant une languette (9) coudée dans le même plan, caractérisé en ce que la languette (9) peut être poussée sur le goujon de blocage (10), dans le sens inverse de la force élastique, pour annuler le blocage.

2. Accouplement à rotule selon la revendication 1, dans lequel est prévue une anse des deux côtés du boîtier d'accouplement, caractérisé en ce que les deux anses (8) sont reliées par un étrier (7).

3. Accouplement à rotule selon la revendication 2, caractérisé en ce qu'à l'état fermé de l'accouplement à rotule, l'étrier (7) présente un écart par rapport au boîtier d'accouplement (1).

4. Accouplement à rotule selon la revendication 1, caractérisé en ce que le goujon de blocage (10) est pourvu d'un rouleau (13) sur lequel la languette (9) de l'anse (8) peut être appuyée.

5. Accouplement à rotule selon la revendication 1, caractérisé en ce que la surface d'appui (14) tournée en direction du goujon de blocage (10) a une forme courbe.

6. Accouplement à rotule selon la revendication 1, caractérisé en ce que l'anse (8) présente un mentonnet de sécurité (15), le goujon de blocage (10) et/ou le rouleau (13), à l'état fermé de l'accouplement à rotule, s'étendant dans l'interstice séparant la languette (9) et le mentonnet de sécurité (15).

7. Accouplement à rotule selon la revendication 1, caractérisé en ce que le goujon de blocage (10) est soumis à l'action d'au moins un ressort de traction (12) fixé d'un côté sur le goujon (3) et de l'autre côté sur le goujon de blocage (10).

8. Accouplement à rotule selon la revendication 7, caractérisé en ce que sont prévus deux ressorts de traction (12) attachés dans la zone du goujon de blocage (10) sur un support de ressort (16) rattaché au goujon de blocage (10).

9. Accouplement à rotule selon la revendication 8, caractérisé en ce que la section du support de ressort (16) a approximativement une forme de U, les deux branches parallèles étant fixées sur le goujon de blocage (10), tandis que les ressorts de traction (12) sont accrochés sur la bride reliant les deux branches parallèles.

10. Accouplement à rotule selon l'une quelconque des revendications précédentes 1 à 9, caractérisé en ce que, sur la face supérieure de l'accouplement à rotule (1) est prévue une ouverture (17), à travers laquelle on peut enfoncer une serrure enfichable (18), un doigt de la serrure enfichable (18) s'étendant jusqu'à l'intérieur du boîtier d'accouplement (1) étant disposé, sur le côté du support de ressort (16) opposé au goujon de blocage (10), derrière la bride reliant les branches du support de ressort (16).

11. Accouplement à rotule selon la revendication 1, caractérisé en ce que des moyens de butée sont prévus pour limiter la zone de déplacement de l'anse (8).

12. Accouplement à rotule selon la revendication 11, caractérisé en ce qu'une équerre de butée (19) est prévue sur l'anse (8) pour servir de moyen de butée, cette équerre s'étendant jusque dans la zone de la face supérieure du boîtier d'accouplement (1).

13. Accouplement à rotule selon la revendication 1, caractérisé en ce que une branche du ressort spiral (4) traverse la face supérieure du boîtier d'accouplement (1) et est fixée sur l'anse (8) en dehors de l'axe de rotation formé par le goujon (3) entre le goujon (3) et l'extrémité de préhension de l'anse (8).
